# FASCICULE DE BREVET EUROPEEN

(11) **EP 4 038 288 B1**
(45) Date de publication et mention de la délivrance du brevet: **12.07.2023**
(21) Numéro de dépôt: 20793747.5
(22) Date de dépôt: 29.09.2020
(51) Int. Cl.: F16D 11/14, A01D 34/69, F16D 41/22, F16H 1/22, F16H 3/085, F16H 3/093, F16H 3/10

(54) **TRANSMISSION POUR ENGIN ROULANT À CONDUCTEUR MARCHANT, ET UN ENGIN ROULANT ÉQUIPÉ D'UNE TELLE TRANSMISSION**
GETRIEBE FÜR EIN FUSSGÄNGERGESTEUERTES RADFAHRZEUG UND MIT EINEM SOLCHEN GETRIEBE AUSGERÜSTETES RADFAHRZEUG
TRANSMISSION FOR PEDESTRIAN-CONTROLLED WHEELED VEHICLE AND WHEELED VEHICLE EQUIPPED WITH SUCH A TRANSMISSION

(30) Priorité: 03.10.2019 FR 1910942
(43) Date de publication de la demande: 10.08.2022
(73) Titulaire: France Reducteurs, 85500 Les Herbiers (FR)
(72) Inventeur: BRU, Pierre, 49230 MONTFAUCON (FR); DIDIER, Nicolas, 85640 MOUCHAMPS (FR)
(74) Mandataire: Ipsilon
(86) Numéro de dépôt international: PCT/FR2020/051706
(87) Numéro de publication internationale: WO 2021/064322

(56) Documents cités:
- AU-A4- 2009 100 186
- FR-A1- 3 036 447

## Description

La présente invention concerne une transmission pour engin roulant à conducteur marchant, et un engin roulant équipé d'une telle transmission.

Elle concerne plus particulièrement une transmission pour engin roulant à conducteur marchant comprenant un organe menant, un organe mené rotatif, tel qu'une roue dentée, en prise permanente avec l'organe menant, des moyens d'entraînement des roues d'une même paire de roues de l'engin, lesdits moyens d'entraînement comprenant un arbre d'entraînement de roues réalisé d'un seul tenant ou d'au moins deux sections d'arbre d'entraînement de roue coaxiales aptes à entraîner chacune une roue d'une même paire de roues de l'engin, et disposé entre, l'arbre d'entraînement de roues ou chacune des sections d'arbre d'entraînement de roue et l'organe mené, un mécanisme d'embrayage, le ou chaque mécanisme d'embrayage comprenant au moins une pièce déplaçable axialement, sur l'arbre d'entraînement de roue ou la section d'arbre d'entraînement de roue avec lequel ledit mécanisme d'embrayage coopère, entre une position écartée de l'organe mené et une position rapprochée de l'organe mené, la position écartée de l'organe mené correspondant à un état activé du mécanisme d'embrayage correspondant, la position rapprochée de l'organe mené correspondant à un état désactivé du mécanisme d'embrayage correspondant, le ou chaque mécanisme d'embrayage étant activé par l'entraînement en rotation de l'organe mené suivant un premier sens d'entraînement en rotation dit marche avant, et désactivable par l'entraînement en rotation de l'organe mené suivant un deuxième sens de rotation opposé audit premier sens de rotation et dit marche arrière, ou par l'entraînement en rotation en marche avant de l'arbre ou de la section d'arbre d'entraînement de roue avec lequel il coopère, lorsque la vitesse de rotation de l'arbre ou de la section d'arbre d'entraînement de roue est supérieure à la vitesse de rotation de l'organe mené, l'arbre d'entraînement de roue ou chaque section d'arbre d'entraînement de roue étant, à l'état désactivé du mécanisme d'embrayage correspondant, libre de tourner dans l'un quelconque de ses sens de rotation.

De telles transmissions intègrent un embrayage, dit automatique, qui ne nécessite pas, pour son fonctionnement, un organe de commande dédié, tel qu'une fourchette, comme cela est le cas dans des embrayages traditionnels. Ces embrayages dits automatiques étant particulièrement sensibles, les fabricants sont en permanence à la recherche de solutions permettant d'améliorer leur fiabilité et leurs performances. Un exemple de transmission pour engin roulant à conducteur marchant se trouve dans le document FR3036447A1.

Un but de la présente invention est donc de proposer une transmission du type précité dont la conception permet d'améliorer la fiabilité des mécanismes d'embrayage.

A cet effet, l'invention a pour objet une transmission pour engin roulant à conducteur marchant, comprenant un organe menant, un organe mené rotatif, tel qu'une roue dentée, en prise permanente avec l'organe menant, des moyens d'entraînement des roues d'une même paire de roues de l'engin, lesdits moyens d'entraînement comprenant un arbre d'entraînement de roues réalisé d'un seul tenant ou d'au moins deux sections d'arbre d'entraînement de roue coaxiales aptes à entraîner chacune une roue d'une même paire de roues de l'engin, et disposé entre, l'arbre d'entraînement de roues ou chacune des sections d'arbre d'entraînement de roue et l'organe mené, un mécanisme d'embrayage, le ou chaque mécanisme d'embrayage comprenant au moins une pièce montée mobile axialement, sur l'arbre d'entraînement de roue ou la section d'arbre d'entraînement de roue avec lequel ledit mécanisme d'embrayage coopère, entre une position écartée de l'organe mené et une position rapprochée de l'organe mené, la position écartée de l'organe mené correspondant à un état activé du mécanisme d'embrayage correspondant, la position rapprochée de l'organe mené correspondant à un état désactivé du mécanisme d'embrayage correspondant, le ou chaque mécanisme d'embrayage étant un mécanisme d'embrayage dit automatique activable par l'entraînement en rotation de l'organe mené suivant un premier sens d'entraînement en rotation dit marche avant, et désactivable par l'entraînement en rotation de l'organe mené suivant un deuxième sens de rotation opposé audit premier sens de rotation et dit marche arrière, ou par l'entraînement en rotation en marche avant de l'arbre ou de la section d'arbre d'entraînement de roue avec lequel il coopère, lorsque la vitesse de rotation de l'arbre ou de la section d'arbre d'entraînement de roue est supérieure à la vitesse de rotation de l'organe mené, l'arbre d'entraînement de roue ou chaque section d'arbre d'entraînement de roue étant, à l'état désactivé du mécanisme d'embrayage correspondant, libre de tourner dans l'un quelconque de ses sens de rotation, caractérisée en ce que ladite au moins une pièce du ou de chaque mécanisme d'embrayage disposée, à l'état désactivé du mécanisme d'embrayage correspondant, en position rapprochée de l'organe mené, est, dans ladite position, limitée en déplacement axial dans le sens d'un écartement de l'organe mené, à l'état entraîné en marche arrière de l'organe mené.

Par embrayage dit automatique, on entend un embrayage qui ne nécessite pas, pour son fonctionnement, un organe de commande dédié, tel qu'une fourchette, comme cela est le cas dans des embrayages traditionnels.

La transmission comprend un système activable/désactivable de limitation en déplacement axial de ladite au moins une pièce du ou de chaque mécanisme d'embrayage dans le sens d'un écartement de l'organe mené à l'état positionné de ladite au moins une pièce en position rapprochée de l'organe mené correspondant à l'état désactivé du mécanisme d'embrayage, ce système de limitation en déplacement axial de ladite au moins une pièce étant actif à l'état entraîné en marche arrière de l'organe mené.

La limitation en déplacement axial d'au moins une partie du mécanisme d'embrayage à l'état désactivé, c'est-à-dire débrayé, du mécanisme d'embrayage et à l'état entraîné en marche arrière de l'organe mené permet d'empêcher une activation, c'est-à-dire un embrayage, non souhaité dudit mécanisme d'embrayage au cours de cet entraînement en marche arrière de l'organe mené.

Selon un mode de réalisation de l'invention, ladite au moins une pièce du ou de chaque mécanisme d'embrayage disposée, à l'état désactivé du mécanisme d'embrayage correspondant, en position rapprochée de l'organe mené, comprend, pour sa limitation en déplacement axial dans le sens d'un écartement de l'organe mené, des éléments de retenue portés par ladite pièce, ces éléments de retenue étant configurés pour, en position rapprochée de ladite pièce de l'organe mené et à l'état entraîné en marche arrière de l'organe mené, venir en prise avec des éléments de retenue complémentaires portés par l'organe mené. En d'autres termes, le système activable/désactivable de limitation en déplacement axial de ladite au moins une pièce du ou de chaque mécanisme d'embrayage dans le sens d'un écartement de l'organe mené, à l'état positionné de ladite au moins une pièce en position rapprochée de l'organe mené correspondant à l'état désactivé du mécanisme d'embrayage, comprend des éléments de retenue portés par ladite pièce, ces éléments de retenue étant configurés pour, en position rapprochée de ladite pièce de l'organe mené et à l'état entraîné en marche arrière de l'organe mené, venir en prise avec des éléments de retenue complémentaires portés par l'organe mené. Cette limitation en déplacement axial d'une partie du mécanisme d'embrayage par rapport à l'organe mené par coopération de formes géométriques complémentaires permet d'empêcher de manière simple une activation non souhaitée dudit mécanisme d'embrayage à l'état désactivé du mécanisme d'embrayage et à l'état entraîné en marche arrière de l'organe mené.

Selon un mode de réalisation de l'invention, les éléments de retenue portés par ladite pièce sont disposés sur un cercle de centre situé au niveau de l'arbre d'entraînement de roues.

Selon un mode de réalisation de l'invention, les éléments de retenue portés par ladite pièce affectent la forme de crochets.

Selon un mode de réalisation de l'invention, ladite au moins une pièce du ou de chaque mécanisme d'embrayage, disposée, à l'état désactivé du mécanisme d'embrayage correspondant, en position rapprochée de l'organe mené, se présente sous forme d'un plateau d'embrayage monté, sur ledit arbre ou la section d'arbre d'entraînement de roue, libre à rotation et mobile axialement, et les éléments de retenue portés par ladite pièce sont disposés en saillie de la face du plateau en regard de l'organe mené.

Selon un mode de réalisation de l'invention, ladite au moins une pièce du ou de chaque mécanisme d'embrayage est disposée, à l'état activé du mécanisme d'embrayage correspondant, écartée de l'organe mené et en prise avec un élément porté par, et solidaire en rotation de, l'arbre ou de la section d'arbre d'entraînement, et, à l'état désactivé du mécanisme d'embrayage correspondant, rapprochée de l'organe mené et désaccouplée de l'élément porté par, et solidaire en rotation, de l'arbre d'entraînement de roues ou de la section d'arbre d'entraînement de roue.

Le ou chaque mécanisme d'embrayage dit automatique, activable par l'entraînement en rotation de l'organe mené suivant un premier sens d'entraînement en rotation dit marche avant, est configuré pour permettre à l'état entraîné en rotation dudit organe mené en marche avant par contact d'appui de l'organe mené et de ladite au moins une pièce mobile axialement du ou de chaque mécanisme d'embrayage un déplacement axial de ladite pièce mobile axialement dans le sens d'un écartement de l'organe mené. Ce déplacement axial de ladite pièce mobile axialement dans le sens d'un écartement de l'organe mené correspond au passage du mécanisme d'embrayage associé de l'état désactivé à l'état activé. Le ou chaque mécanisme d'embrayage dit automatique, désactivable par l'entraînement en rotation de l'organe mené suivant un deuxième sens de rotation opposé audit premier sens d'entraînement en rotation et dit marche arrière, est configuré pour permettre, à l'état entraîné en rotation dudit organe mené en marche arrière, par contact d'appui de ladite au moins une pièce du ou de chaque mécanisme d'embrayage et de l'élément porté par, et solidaire en rotation de, l'arbre ou de la section d'arbre d'entraînement de roues un déplacement axial de ladite pièce mobile axialement dans le sens d'un rapprochement de l'organe mené Ce déplacement axial de ladite pièce mobile axialement dans le sens d'un rapprochement de l'organe mené correspond au passage du mécanisme d'embrayage associé de l'état activé à l'état désactivé.

Selon un mode de réalisation de l'invention, ladite au moins une pièce du ou de chaque mécanisme d'embrayage qui a la forme d'un plateau d'embrayage et l'organe mené, qui affecte de préférence la forme d'une roue dentée, sont munis, sur chacune de leurs faces, de rampes, les rampes d'une face du plateau coopérant, lors du passage de l'état désactivé à l'état activé du mécanisme d'embrayage, avec les rampes de l'organe mené pour un déplacement axial du plateau d'embrayage dans une première direction d'écartement de l'organe mené et de solidarisation du plateau avec l'élément porté par, et solidaire en rotation de, l'arbre ou de la section d'arbre d'entraînement de roue, les rampes de l'autre face du plateau coopérant, lors du passage de l'état activé à l'état désactivé du mécanisme d'embrayage, avec des rampes de l'élément porté par, et solidaire en rotation de, l'arbre ou de la section d'arbre d'entraînement de roue pour provoquer par déplacement axial de sens opposé dudit plateau d'embrayage, la mise en roue libre de l'arbre ou de la section d'arbre d'entraînement de roue.

Selon un mode de réalisation de l'invention, les rampes d'une face du plateau d'embrayage qui coopèrent, lors du passage de l'état désactivé à l'état activé du mécanisme d'embrayage, avec les rampes de l'organe mené pour un déplacement axial du plateau d'embrayage dans une première direction d'écartement de l'organe mené sont ménagées sur les éléments de retenue portés par ledit plateau d'embrayage.

Selon un mode de réalisation de l'invention, les rampes de l'organe mené avec lesquelles les rampes d'une face du plateau d'embrayage coopèrent, lors du passage de l'état désactivé à l'état activé du mécanisme d'embrayage, pour un déplacement axial du plateau d'embrayage dans une première direction d'écartement de l'organe mené sont ménagées sur les éléments de retenue complémentaires portés par l'organe mené.

Selon un mode de réalisation de l'invention, les éléments de retenue portés par ladite pièce sont en forme générale de L et comprennent une première branche prenant naissance sur le plateau d'embrayage et se développant orthogonalement au plateau d'embrayage suivant une direction parallèle à l'arbre d'entraînement de roues et une deuxième branche orthogonale à la première branche.

Selon un mode de réalisation de l'invention, le ou au moins l'un des mécanismes d'embrayage, les éléments de retenue complémentaires de l'organe mené avec lesquels viennent en prise les éléments de retenue portés par la au moins une pièce dudit mécanisme d'embrayage, en position rapprochée de ladite pièce de l'organe mené et à l'état entraîné en marche arrière de l'organe mené, affectent la forme de crochets disposés sur un cercle de centre situé au niveau de l'arbre d'entraînement de roues, lesdits crochets de l'organe mené étant configurés pour s'interpénétrer avec les éléments de retenue de ladite au moins une pièce dudit mécanisme d'embrayage à l'état en prise desdits éléments de retenue avec les éléments de retenue complémentaires.

Selon un mode de réalisation de l'invention, la transmission comprend un système moteur d'entraînement en rotation de l'organe menant configuré pour permettre d'une part, un entraînement dans le sens d'un entraînement en marche avant de l'organe mené, d'autre part un entraînement dans le sens d'un entraînement en marche arrière de l'organe mené.

Selon un mode de réalisation de l'invention, elle comprend un système de commande du système moteur d'entraînement en rotation de l'organe menant.

L'invention a encore pour objet un engin roulant à conducteur marchant, tel que tondeuse à gazon, caractérisé en ce qu'il est équipé d'une transmission du type précité.

### Brève description des dessins

L'invention sera bien comprise à la lecture de la description suivante d'exemples de réalisation, en référence aux dessins annexés dans lesquels :
[Fig. 1] représente une vue en perspective d'un engin conforme à l'invention,
[Fig. 2A] représente une vue partielle d'une transmission conforme à l'invention dans laquelle l'arbre d'entraînement de roues est formé de deux sections d'arbre,
[Fig. 2B] représente une vue partielle d'une transmission conforme à l'invention dans laquelle l'arbre d'entraînement de roues est réalisé d'un seul tenant,
[Fig. 3A] représente une vue partielle en position éclatée des éléments la constituant d'une transmission conforme à l'invention,
[Fig. 3B] représente une autre vue partielle en position éclatée des éléments la constituant d'une transmission conforme à l'invention,

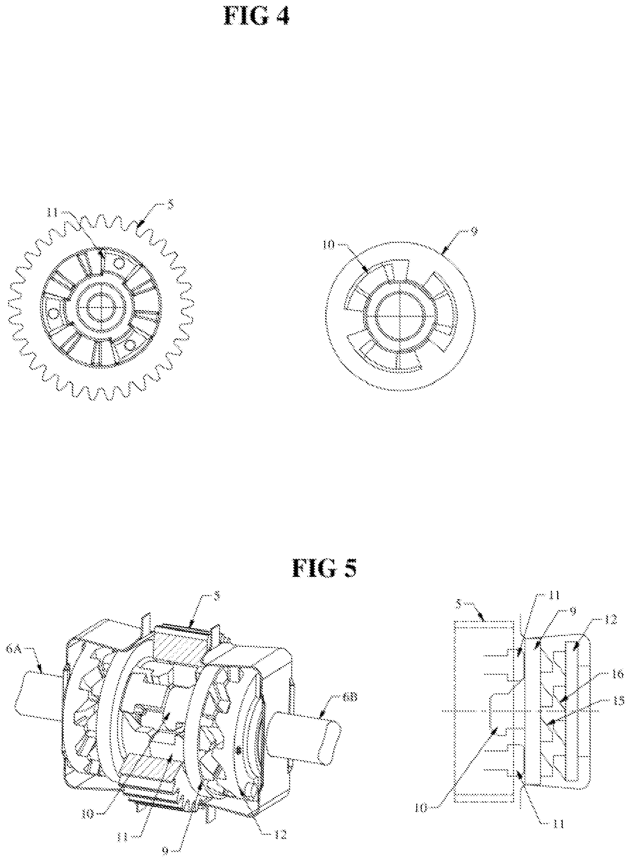

[Fig. 4] représente une vue de face de l'organe mené et de la pièce du ou de l'un des mécanismes d'embrayage mobile axialement,
[Fig. 5] représente, sous forme d'une vue partielle en perspective et d'une vue schématique partielle, une transmission conforme à l'invention à l'état désactivé c'est-à-dire en position débrayée du mécanisme d'embrayage,
[Fig. 6] représente sous forme d'une vue partielle en perspective et d'une vue schématique partielle, une transmission conforme à l'invention lors du passage de l'état désactivé à l'état activé du mécanisme d'embrayage par entraînement en marche avant de l'organe mené,
[Fig. 7] représente sous forme d'une vue partielle en perspective et d'une vue schématique partielle, une transmission conforme à l'invention à l'état activé du mécanisme d'embrayage,
[Fig. 8] représente sous forme d'une vue partielle en perspective et d'une vue schématique partielle, une transmission conforme à l'invention à l'état activé du mécanisme d'embrayage,
[Fig. 9] représente sous forme d'une vue partielle en perspective et d'une vue schématique partielle, une transmission conforme à l'invention lors du passage de l'état activé à l'état désactivé du mécanisme d'embrayage à l'état entraîné en marche arrière de l'organe mené,
[Fig. 10] représente sous forme d'une vue partielle en perspective et d'une vue schématique partielle, une transmission conforme à l'invention à l'état désactivé du mécanisme d'embrayage.

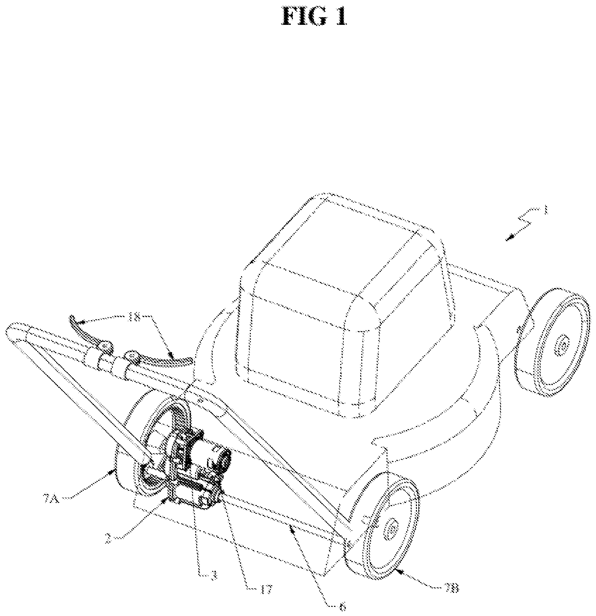

Comme mentionné ci-dessus la transmission 2, objet de l'invention, est plus particulièrement destinée à s'appliquer à un engin 1 roulant notamment à conducteur marchant. La figure 1 représente l'application d'une telle transmission 2 à une tondeuse à gazon. Cette tondeuse à gazon comporte un châssis roulant, les roues arrière du châssis étant représentées en 7A, 7B aux figures.

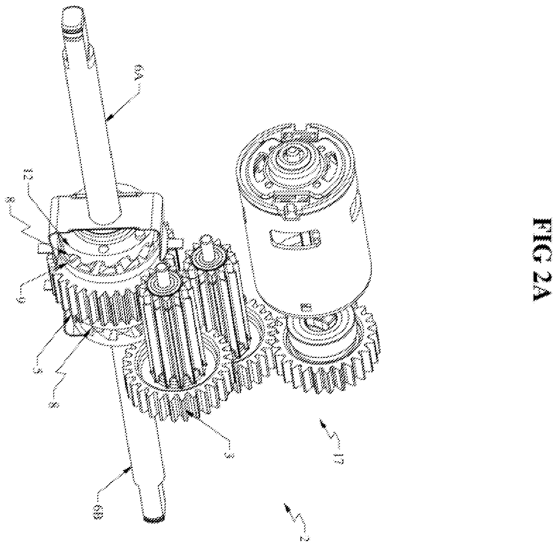

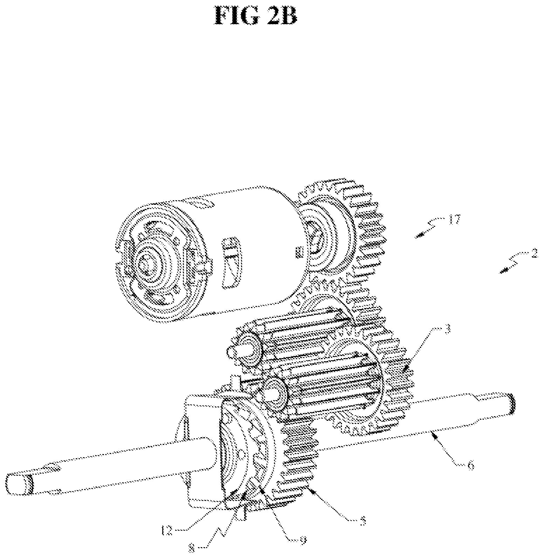

Cette transmission 2 peut être logée au moins partiellement dans un boîtier généralement en matière de synthèse. Cette transmission 2 comprend un organe 3 menant formé ici par un pignon. Cet organe 3 menant aurait pu, de manière équivalente, être réalisé par exemple sous forme d'une vis sans fin. Cet organe 3 menant est un organe rotatif. Cet organe 3 menant est entraîné en rotation par un système 17 moteur d'entraînement en rotation de l'organe 3 menant équipant l'engin 1. Ce système 17 d'entraînement en rotation de l'organe 3 menant comprend un moteur à deux sens de rotation et un engrenage couplant l'arbre de sortie du moteur avec l'organe 3 menant pour un entraînement en rotation de l'organe 3 menant suivant un premier sens de rotation, dit marche avant de l'engin, et un deuxième sens de rotation opposé, dit marche arrière. L'organe 3 menant est en prise permanente par engrènement avec un organe 5 mené rotatif réalisé sous forme d'une roue dentée évidée centralement pour pouvoir être enfilée sur un arbre 6 qui forme l'arbre d'entraînement des roues 7A et 7B de l'engin 1. Cet organe 5 mené est monté libre à rotation sur ledit arbre 6 d'entraînement des roues. L'organe 5 mené est apte à être entraîné en rotation par l'organe 3 menant suivant deux sens de rotation, à savoir un premier sens d'entraînement en rotation, dit marche avant, et un deuxième sens d'entraînement en rotation opposé, dit marche arrière. L'arbre 6 d'entraînement de roue peut être réalisé d'un seul tenant comme illustré à la figure 2B. L'arbre 6 d'entraînement de roue peut également être formé d'au moins deux sections 6A, 6B d'arbre d'entraînement de roue coaxiales aptes à entraîner chacune une roue 7A, 7B d'une même paire de roues de l'engin.

Ces sections 6A, 6B d'arbre sont maintenues alignées par des moyens de maintien et sont, à l'état aligné, aptes à être animées d'un déplacement relatif en rotation. Les moyens de maintien sont par exemple formés par un axe de liaison couplé à chacune de ses extrémités par emboîtement à une section d'arbre d'entraînement de roue.

Ces sections 6A, 6B d'arbre d'entraînement s'étendent, dans les exemples représentés, parallèlement à l'arbre moteur du système 17 moteur d'entraînement en rotation de l'organe 3 menant. Aux extrémités des sections 6A, 6B d'arbre d'entraînement de roues peut être disposé, à chaque fois, un pignon destiné à venir en prise avec un pignon porté par chaque roue 7A, 7B de l'engin. Bien évidemment, d'autres moyens de transmission du mouvement de la section 6A ou respectivement 6B d'arbre d'entraînement de roue à la roue 7A ou respectivement 7B peuvent être prévus sans sortir du cadre de l'invention. La réalisation de l'arbre d'entraînement de roues sous forme de deux sections d'arbre permet à chaque roue de la paire de roues de tourner indépendamment de l'autre roue de la paire de roues.

La transmission 2 comprend encore, disposé entre l'arbre 6 d'entraînement de roue ou chacune des sections 6A, 6B d'arbre d'entraînement de roue et l'organe 5 mené, un mécanisme 8 d'embrayage. Ainsi, dans le cas d'un arbre 6 d'entraînement de roues réalisé d'un seul tenant, la transmission 2 ne comprend qu'un seul mécanisme 8 d'embrayage pour la transmission du mouvement de l'organe 5 mené audit arbre 6. Dans le cas d'un arbre 6 d'entraînement de roue formé d'au moins deux sections 6A, 6B d'arbre, la transmission 2 comprend deux mécanismes 8 d'embrayage disposés l'un, entre l'organe 5 mené et la section 6A d'arbre d'entraînement de roue, l'autre entre l'organe 5 mené et la section 6B d'arbre d'entraînement de roues. Ces mécanismes 8 d'embrayage sont aptes à transmettre, l'un, la transmission du mouvement de l'organe 5 mené à la section 6A d'arbre d'entraînement de roue, l'autre, la transmission du mouvement de l'organe 5 mené à la section 6B d'arbre d'entraînement de roue. Ainsi, la roue dentée, formant l'organe 5 mené, disposée coaxiale aux sections 6A, 6B d'arbre d'entraînement de roue, est disposée entre deux mécanismes 8 d'embrayage, chaque mécanisme 8 d'embrayage étant porté, au moins partiellement, par l'une des sections 6A ou 6B d'arbre d'entraînement de roue.

Indépendamment du nombre de mécanismes 8 d'embrayage, la conception et le fonctionnement de chaque mécanisme 8 d'embrayage sont similaires. Le ou chaque mécanisme 8 d'embrayage comprend donc au moins une pièce 9 déplaçable axialement sur l'arbre 6 d'entraînement de roue où la section d'arbre 6A ou 6B d'entraînement de roue avec lequel ledit mécanisme 8 d'embrayage coopère entre une position écartée de l'organe 5 mené et une position rapprochée de l'organe 5 mené. La position de la pièce 9 écartée de l'organe 5 mené correspond à un état activé, c'est-à-dire à l'état embrayé du mécanisme 8 d'embrayage correspondant, état dans lequel le mouvement de l'organe 5 mené peut être transmis à l'arbre 6 d'entraînement de roues. La position de la pièce 9 rapprochée de l'organe 5 mené correspond à un état désactivé du mécanisme 8 d'embrayage correspondant, c'est-à-dire à un état débrayé, dans lequel le mouvement de l'organe 5 mené ne peut pas être transmis à l'arbre 6 d'entraînement de roues. Ladite au moins une pièce 9 du ou de chaque mécanisme 8 d'embrayage disposée, à l'état désactivé du mécanisme 8 d'embrayage correspondant, en position rapprochée de l'organe 5 mené est disposée, à l'état activé du mécanisme 8 d'embrayage correspondant, écartée de l'organe 5 mené et en prise avec un élément 12 porté par et solidaire en rotation de l'arbre 6 ou de la section 6A, 6B d'arbre d'entraînement. Cette pièce 9 du ou de chaque mécanisme 8 d'embrayage est encore, à l'état désactivé du mécanisme 8 d'embrayage correspondant, rapprochée de l'organe 5 mené et désaccouplée de l'élément 12 porté par et solidaire en rotation de l'arbre 6 d'entraînement de roues ou de la section 6A, 6B d'arbre d'entraînement de roue. Cette pièce 9 du ou de chaque mécanisme 8 d'embrayage est donc mobile axialement dans le sens d'un rapprochement et d'un écartement de l'organe 5 mené pour pouvoir être écartée ou rapprochée de l'élément 12 solidaire en rotation de l'arbre d'entraînement de roue. Le ou chaque mécanisme 8 d'embrayage dit automatique, activable par l'entraînement en rotation de l'organe 5 mené suivant un premier sens d'entraînement en rotation dit marche avant, est donc configuré pour permettre à l'état entraîné en rotation dudit organe mené en marche avant par contact d'appui de l'organe 5 mené et de ladite au moins une pièce 9 mobile axialement du mécanisme 8 d'embrayage associé un déplacement axial de ladite pièce 9 mobile axialement dans le sens d'un écartement de l'organe 5 mené. Ce déplacement axial de ladite pièce 9 mobile axialement dans le sens d'un écartement de l'organe 5 mené correspond au passage du mécanisme d'embrayage associé de l'état désactivé à l'état activé. Le ou chaque mécanisme d'embrayage dit automatique, désactivable par l'entraînement en rotation de l'organe 5 mené suivant un deuxième sens de rotation opposé audit premier sens d'entraînement en rotation et dit marche arrière, est configuré pour permettre, à l'état entraîné en rotation dudit organe 5 mené en marche arrière, par contact d'appui de ladite au moins une pièce 9 du mécanisme 8 d'embrayage associé et de l'élément 12 porté par, et solidaire en rotation de, l'arbre ou de la section d'arbre d'entraînement de roues un déplacement axial de ladite pièce 9 mobile axialement dans le sens d'un rapprochement de l'organe 5 mené. Ce déplacement axial de ladite pièce 9 mobile axialement dans le sens d'un rapprochement de l'organe 5 mené correspond au passage du mécanisme 8 d'embrayage associé de l'état activé à l'état désactivé. Dans les exemples représentés, ladite au moins une pièce 9 du ou de chaque mécanisme 8 d'embrayage disposée, à l'état désactivé du mécanisme 8 d'embrayage correspondant, en position rapprochée de l'organe 5 mené se présente sous forme d'un plateau 91 d'embrayage monté sur ledit arbre 6 ou la section 6A, 6B d'arbre d'entraînement de roue, libre à rotation et mobile axialement. L'élément 12 avec lequel le plateau 91 d'embrayage est apte à venir en prise à l'état activé du mécanisme 8 d'embrayage correspondant se présente, par exemple, également sous forme d'un plateau évidé centralement pour pouvoir être enfilé sur l'arbre 6 d'entraînement de roues. Cet élément 12 est rendu solidaire en rotation de l'arbre 6 d'entraînement de roue par une goupille ou des cannelures ou par tout autre type de liaison arbre/roue. Cet élément 12 est monté fixe axialement sur l'arbre 6 d'entraînement de roues. Pour permettre un déplacement axial du plateau 91 d'embrayage, le plateau 91 d'embrayage et l'organe 5 mené, qui affecte ici la forme d'une roue dentée, sont munis, pour le plateau 91 d'embrayage sur chacune de ses faces, et pour l'organe 5 mené sur au moins l'une de ses faces, de rampes. Ces rampes assurent le contact d'appui entre pièce 9 et organe 5 mené pour permettre une activation du mécanisme d'embrayage. Les rampes 13 d'une face du plateau 91 coopèrent, lors du passage de l'état désactivé à l'état activé d'un mécanisme 8 d'embrayage, avec les rampes 14 de l'organe 5 mené pour un déplacement axial du plateau 91 d'embrayage dans une première direction d'écartement de l'organe 5 mené et de solidarisation du plateau 91 avec l'élément 12 porté par, et solidaire en rotation de la section 6A ou 6B d'arbre d'entraînement de roue qui porte avec ledit mécanisme 8 d'embrayage. Les rampes 15 de l'autre face du plateau 91 coopèrent, lors du passage de l'état activé à l'état désactivé du mécanisme d'embrayage, avec des rampes 16 de l'élément 12 porté par, et solidaire en rotation de, l'arbre 6A ou 6B d'entraînement de roue qui porte ledit mécanisme 8 d'embrayage pour provoquer par déplacement axial de sens opposé dudit plateau 91 d'embrayage, la mise en roue libre de la section 6A ou 6B d'arbre d'entraînement de roue portant le mécanisme d'embrayage. A nouveau, ces rampes assurent le contact d'appui entre la pièce 9 et l'élément 12 pour permettre une désactivation du mécanisme d'embrayage. Comme l'organe 5 mené peut comporter des rampes sur ses deux faces, il est apte à coopérer avec le plateau d'embrayage de chacun des mécanismes 8 d'embrayage.

Les rampes de l'organe 5 mené et du plateau 9 d'embrayage sont ici formées par l'un des flancs de crénelures ou dents en saillie desdites faces.

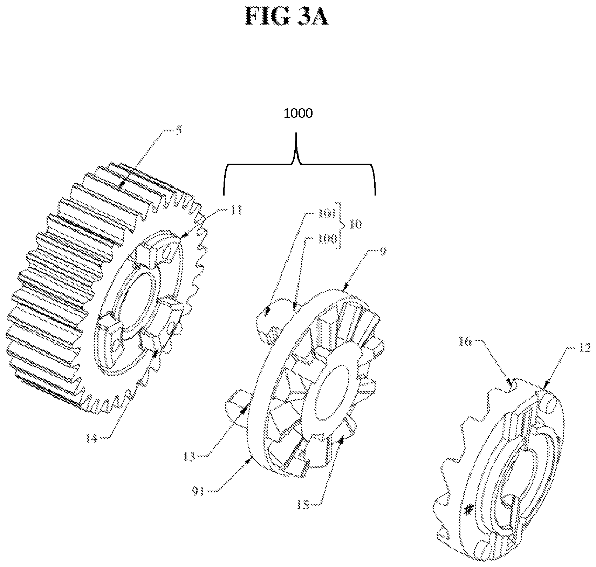

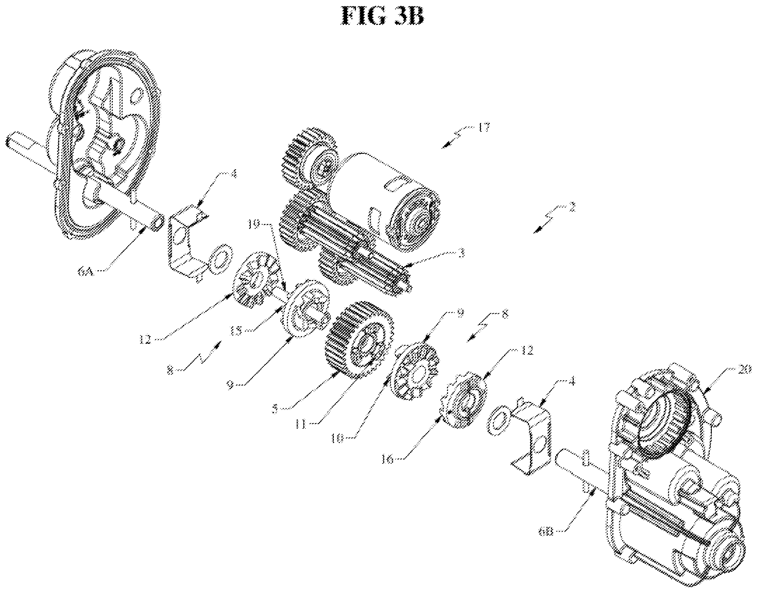

Dans l'exemple représenté à la figure 3A, la roue dentée constitutive de l'organe 5 mené présente, sur chacune de ses faces, une couronne de dents avec chaque dent présentant un sommet élargi conférant à la dent une forme générale en T. La branche horizontale du T est munie à chacune de ses extrémités d'un pan coupé. L'un des pans coupés forme une rampe 14 de l'organe 5 mené pour un déplacement axial du plateau 91 d'embrayage dans le sens d'un écartement de l'organe 5 mené.

Le plateau 91 d'embrayage comporte, sur sa face tournée vers l'organe 5 mené, une couronne de dents avec chaque dent comportant un flanc réalisé sur au moins une partie de sa longueur parallèle à l'axe de rotation des sections d'arbre d'entraînement de roue et un flanc réalisé sur au moins une partie de sa longueur inclinée et formant un angle avec ledit axe de rotation. La partie inclinée de flanc forme la rampe représentée en 13 aux figures. Ce flanc est le flanc sollicité lors de l'entraînement en marche avant de l'organe 5 mené par contact d'appui avec une dent de l'organe 5 mené pour provoquer un déplacement axial du plateau d'embrayage dans le sens d'un écartement de l'organe 5 mené. Ce déplacement résulte du contact d'appui des rampes 13 et 14. L'autre face du plateau 91 d'embrayage, c'est-à-dire celle tournée vers l'élément 12 solidaire en rotation de la section d'arbre d'entraînement de roue, qui est ici formé par une roue ou plateau à rampes, comporte, de la même manière, une couronne de dents à flancs l'un, droit, l'autre, incliné. Le flanc incliné de chaque dent est représenté en 15 aux figures et représente la rampe destinée à coopérer avec l'élément 12 pour un déplacement axial du plateau 91 d'embrayage dans le sens d'un rapprochement de l'organe 5 mené.

L'élément 12, solidaire en rotation de la section d'arbre d'entraînement de roue, comporte également une couronne de dents dont chaque dent présente l'un de ses flancs incliné, et représenté en 16 aux figures, et l'autre flanc droit. Pour chaque dent du plateau 91 d'embrayage et de l'élément 12, un flanc droit d'une dent du plateau 91 d'embrayage coopère avec un flanc droit d'une dent de l'élément 12 solidaire en rotation de la section d'arbre d'entraînement de roue lors de l'entraînement en marche avant de l'organe 5 mené, à l'état écarté du plateau 91 d'embrayage de l'organe 5 mené. Cette coopération par contact d'appui se poursuit au moins tant que la vitesse d'entraînement en rotation de la section d'arbre d'entraînement de roues ou de l'arbre d'entraînement de roues est inférieure à la vitesse de l'organe 5 mené.

Lorsque la vitesse de l'arbre 6 d'entraînement de roue ou de la section d'arbre d'entraînement en rotation de roues devient supérieure à la vitesse de rotation de l'organe 5 mené, par exemple lors d'une prise de virage avec la roue de l'arbre formant la roue extérieure dans ledit virage, la section d'arbre d'entraînement et l'élément 12 deviennent menants de sorte que chaque dent de l'élément 12 coopère, au niveau de son flanc incliné formant rampe, représenté en 16 aux figures, par contact d'appui avec le flanc incliné formant rampe et représenté en 15 des dents du plateau 91 d'embrayage pour provoquer un déplacement axial du plateau 91 d'embrayage dans le sens d'un rapprochement de l'organe 5 mené jusqu'à une position désaccouplée desdites rampes correspondant à l'état désactivé du mécanisme 8 d'embrayage.

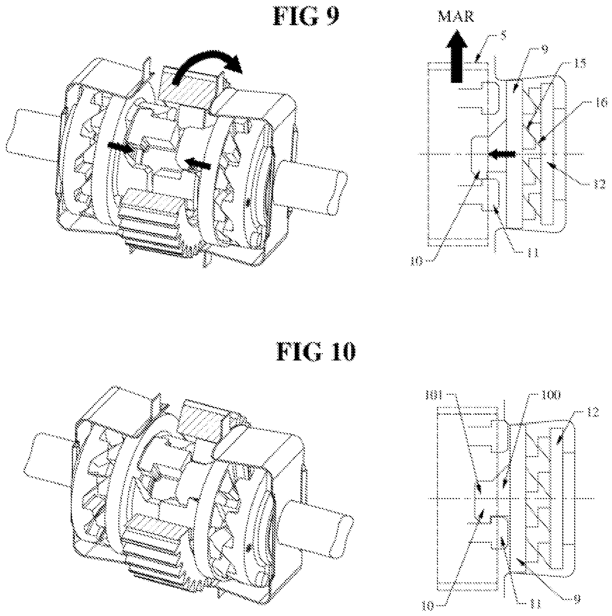

Lorsque l'organe 5 mené est entraîné en marche arrière, comme l'illustre la figure 9, suite à l'inversion de sens d'entraînement en rotation de l'organe 3 menant, ce sont à nouveau les rampes 15 et 16 formées par les flancs inclinés des dents du plateau 91 d'embrayage et de l'élément 12 monté solidaire en rotation de la section d'arbre d'entraînement de roue qui sont en contact d'appui et provoquent un déplacement axial du plateau 91 d'embrayage dans le sens d'un rapprochement de l'organe 5 mené jusqu'à une position désaccouplée desdites rampes du plateau 91 d'embrayage et de l'élément 12 correspondant à l'état désactivé du mécanisme 8 d'embrayage.

Ce déplacement axial est provoqué lorsque la plage d'entraînement en rotation de l'organe 5 mené s'étend sur un tour ou moins d'un tour d'entraînement en rotation dudit organe 5 mené en fonction des configurations des rampes.

La variation de vitesse relative entre plateau 9 d'embrayage et élément 12 solidaire en rotation de la section d'arbre d'entraînement de roue permet donc automatiquement, lorsque l'élément 12 devient menant, un passage à l'état désactivé du mécanisme 8 d'embrayage lors de l'entraînement en marche avant de l'organe 5 mené, tandis que la configuration des rampes amène automatiquement à une désactivation lors de l'entraînement en marche arrière de l'organe 5 mené.

Chaque mécanisme 8 d'embrayage comprend pour son fonctionnement un frein 4 actif de manière permanente sur la pièce 9 formant plateau 91 d'embrayage du ou de chaque mécanisme 8 d'embrayage. Ce frein est ici formé par une lame ressort en U enfilée sur l'arbre d'entraînement de roue, les branches dudit U prenant appui sur la pièce 9 formant plateau 91 d'embrayage dudit mécanisme 8 d'embrayage. La présence de ce frein génère un freinage permanent de l'entraînement en déplacement angulaire de ladite pièce 9. Il résulte de la conception des mécanismes d'embrayage, tels que décrit ci-dessus, que chaque mécanisme 8 d'embrayage est activé par l'entraînement en rotation de l'organe 5 mené suivant le premier sens d'entraînement en rotation, dit marche avant, et déplacement axial de la pièce 9 du mécanisme d'embrayage formant plateau 91 d'embrayage dans le sens d'un écartement de l'organe 5 mené pour venir en prise avec l'élément 12 solidaire en rotation de l'arbre. A l'état activé, la pièce 9 du mécanisme 8 d'embrayage formant plateau 91 d'embrayage est donc disposée écartée de l'organe 5 mené, c'est-à-dire éloignée de l'organe 5 mené d'une distance supérieure à celle qui la sépare de l'organe 5 mené à l'état désactivé du mécanisme 8 d'embrayage. Le ou chaque mécanisme 8 d'embrayage est désactivable par l'entraînement en rotation en marche avant de la section 6A ou 6B d'arbre d'entraînement de roue avec laquelle il coopère, lorsque la vitesse de rotation de la section d'arbre d'entraînement de roues est supérieure à la vitesse de rotation de l'organe 5 mené. Par vitesse supérieure, on entend également le cas où l'organe 3 menant est non entraîné en rotation, c'est-à-dire arrêté.

En effet, au cours de l'arrêt de l'organe 3 menant moteur, l'inertie de la machine entraîne une poursuite du déplacement de la machine d'une valeur suffisante pour entraîner en rotation les sections 6A et 6B d'arbre d'entraînement de roues de l'engin et générer par suite une désactivation des mécanismes 8 d'embrayage.

De la même manière, chaque mécanisme d'embrayage est conçu pour être désactivé, lorsque la vitesse de rotation de l'arbre ou de la section d'arbre d'entraînement de roues qui porte le mécanisme 8 d'embrayage est supérieure à la vitesse de rotation de l'organe 5 mené, par exemple lors d'une prise de virage.

A l'état désactivé du mécanisme d'embrayage, la roue de l'engin et la section d'arbre ou l'arbre qui la porte peuvent tourner librement dans les deux sens de rotation. En outre, chaque roue d'une paire de roues de l'engin peut tourner indépendamment de l'autre roue de l'engin dans le cas d'un arbre réalisé sous forme de sections d'arbre.

La désactivation du mécanisme d'embrayage peut encore être obtenue par entraînement en rotation en marche arrière de l'organe 5 mené.

Pour permettre l'entraînement en marche avant ou en marche arrière de l'organe 5 mené, à l'aide du système 17 moteur d'entraînement en rotation de l'organe 3 menant, l'engin comprend un système 18 de commande du système 17 moteur. Ce système 18 de commande comprend au moins un organe de commande manuel, tel qu'une poignée ou un levier, positionné au niveau du guidon de l'engin et actionnable manuellement par le conducteur de l'engin. Généralement, ce système 18 de commande est configuré pour permettre une commande manuelle de l'entraînement en marche avant de l'organe 5 mené par actionnement de l'organe de commande manuel tandis que l'entraînement en marche arrière de l'organe 5 mené peut s'opérer de manière automatique, par exemple une fois l'organe de commande manuel relâché. En variante, l'entraînement en marche arrière de l'organe 5 mené peut être également commandé manuellement. Pour parfaire le fonctionnement de cette transmission 2 et éviter le passage de l'état désactivé à l'état activé du ou de chaque mécanisme 8 d'embrayage, à l'état entraîné en marche arrière de l'organe mené, la pièce 9 du ou de chaque mécanisme 8 d'embrayage disposée à l'état désactivé du mécanisme 8 d'embrayage correspondant, en position rapprochée de l'organe 5 mené est, dans ladite position, limitée en déplacement axial dans le sens d'un écartement de l'organe 5 mené à l'état entraîné en marche arrière de l'organe 5 mené. La transmission comprend un système 1000 activable/désactivable de limitation en déplacement axial de ladite au moins une pièce 9 du ou de chaque mécanisme 8 d'embrayage dans le sens d'un écartement de l'organe 5 mené à l'état positionné de ladite au moins une pièce en position rapprochée de l'organe mené correspondant à l'état désactivé du mécanisme d'embrayage, ce système 1000 de limitation en déplacement axial de ladite au moins une pièce 9 étant actif à l'état entraîné en marche arrière de l'organe 5 mené de sorte que la pièce 9 du ou de chaque mécanisme 8 d'embrayage disposée à l'état désactivé du mécanisme 8 d'embrayage correspondant, en position rapprochée de l'organe 5 mené est, dans ladite position, limitée en déplacement axial dans le sens d'un écartement de l'organe 5 mené à l'état entraîné en marche arrière de l'organe 5 mené. A cet effet, la pièce 9 formant plateau d'embrayage du ou de chaque mécanisme 8 d'embrayage comprend, pour sa limitation en déplacement axial dans le sens d'un écartement de l'organe 5 mené, des éléments 10 de retenue portés par ladite pièce 9. Ces éléments 10 de retenue sont configurés pour, en position rapprochée de la pièce 9 de l'organe 5 mené, et à l'état entraîné en marche arrière de l'organe 5 mené, venir en prise avec des éléments 11 de retenue complémentaires portés par l'organe 5 mené. Dans les exemples représentés, les éléments 10 de retenue portés par la pièce 9 formant plateau 91 d'embrayage affectent la forme de crochets. Ces éléments 10 de retenue sont disposés en saillie de la face du plateau 91 d'embrayage en regard de l'organe 5 mené. En particulier, les éléments 10 de retenue portés par ladite pièce 9 sont en forme générale de L et comprennent une première branche 100 prenant naissance sur le plateau 91 d'embrayage et se développant orthogonalement au plateau 91 d'embrayage suivant une direction parallèle à l'arbre 6 d'entraînement de roues et une deuxième branche 101 orthogonale à la première branche 100. Le système 1000 activable/désactivable de limitation en déplacement axial de ladite au moins une pièce du ou de chaque mécanisme d'embrayage dans le sens d'un écartement de l'organe mené, à l'état positionné de ladite au moins une pièce en position rapprochée de l'organe mené correspondant à l'état désactivé du mécanisme d'embrayage, comprend des éléments 10 de retenue portés par ladite pièce 9, ces éléments 10 de retenue étant configurés pour, en position rapprochée de ladite pièce 9 de l'organe 5 mené et à l'état entraîné en marche arrière de l'organe 5 mené, venir en prise avec des éléments 11 de retenue complémentaires portés par l'organe mené.

Ces éléments 10 de retenue portés par la pièce 9 sont disposés sur un cercle de centre situé au niveau de l'arbre 6 d'entraînement de roue. Le centre du cercle est en effet disposé sur l'axe de rotation de l'arbre 6 d'entraînement de roue. Les éléments 11 de retenue complémentaires de l'organe 5 mené avec lesquels viennent en prise les éléments 10 de retenue portés par la pièce 9 du mécanisme 8 d'embrayage en position rapprochée de ladite pièce 9 de l'organe 5 mené et à l'état entraîné en marche arrière de l'organe 5 mené, affectent la forme de crochets disposés sur un cercle de centre situé au niveau de l'arbre 6 d'entraînement de roues. Ces crochets sont en forme générale de T. Pour le ou au moins l'un des mécanismes 8 d'embrayage, les éléments 11 de retenue complémentaires de l'organe 5 mené avec lesquels viennent en prise les éléments 10 de retenue portés par la au moins une pièce 9 dudit mécanisme 8 d'embrayage, en position rapprochée de ladite pièce 9 de l'organe 5 mené, et à l'état entraîné en marche arrière de l'organe 5 mené, affectent la forme de crochets disposés sur un cercle de centre situé au niveau de l'arbre 6 d'entraînement de roues. Ces crochets de l'organe 5 mené sont configurés pour s'interpénétrer avec les éléments 10 de retenue de ladite au moins une pièce 9 dudit mécanisme 8 d'embrayage à l'état en prise desdits éléments 10 de retenue avec les éléments 11 de retenue complémentaires.

On note que pour des raisons de simplicité, les rampes 13 d'une face du plateau 91 d'embrayage qui coopèrent, lors du passage de l'état désactivé à l'état activé du mécanisme 8 d'embrayage, avec les rampes 14 de l'organe 5 mené pour un déplacement axial du plateau 91 d'embrayage dans une première direction d'écartement de l'organe 5 mené sont ménagées sur les éléments 10 de retenue portés par ledit plateau 91 d'embrayage.

En effet, les dents du plateau 91 d'embrayage portant les rampes 13 et les crochets des éléments 10 de retenue sont ici réalisés d'une seule pièce et la rampe 13, équipant chaque élément 10 de retenue ou dent, est ménagée à la base dudit élément 10 de retenue ou de la dent au niveau de la zone de raccordement de l'élément 10 de retenue ou de la dent au plateau 91 d'embrayage. De manière similaire, les rampes 14 de l'organe 5 mené avec lesquelles les rampes 13 d'une face du plateau 91 d'embrayage coopèrent, lors du passage de l'état désactivé à l'état activé du mécanisme 8 d'embrayage, pour un déplacement axial du plateau 91 d'embrayage dans une direction d'écartement de l'organe 5 mené sont ménagées sur les éléments 11 de retenue complémentaires portés par l'organe 5 mené. Les dents porte-rampes et les éléments 11 de retenue complémentaires de l'organe 5 mené sont donc réalisés d'une seule pièce.

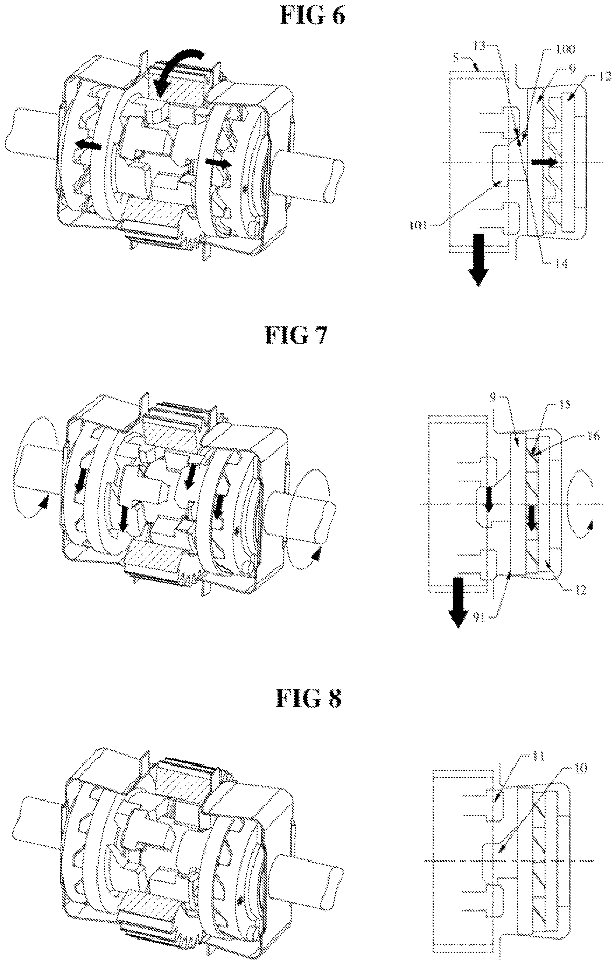

Ainsi, une extrémité de la branche horizontale du T de chaque dent constitutive de l'élément 11 de retenue complémentaire de l'organe 5 mené est apte à s'insérer dans la partie du crochet constitutif de chaque élément 10 de retenue de la pièce 9 formant plateau 91 d'embrayage au niveau de la zone de liaison entre les branches du crochet en L de sorte, que dans cette position, un déplacement axial de la pièce 9 formant plateau 91 d'embrayage dans le sens d'un écartement de l'organe 5 mené est empêché. Ainsi, à l'état embrayé du mécanisme 8 d'embrayage, tel qu'illustré à la figure 8, l'entraînement en marche arrière de l'organe 5 mené génère, par coopération des rampes 15 et 16 de la pièce 9 formant plateau 91 d'embrayage et de l'élément 12 solidaire en rotation de l'arbre 6, un déplacement axial de la pièce 9 formant plateau d'embrayage en direction de l'organe 5 mené jusqu'à une position dans laquelle les éléments 10 de retenue de la pièce 9 formant plateau d'embrayage et les éléments 11 de retenue complémentaires de l'organe 5 mené s'interpénètrent comme illustré à la figure 10. Dans cette position, tout déplacement axial de la pièce 9 formant plateau 91 d'embrayage dans le sens d'un écartement de l'organe 5 mené est empêché.

## Revendications

1. Transmission (2) pour engin (1) roulant à conducteur marchant, comprenant un organe (3) menant, un organe (5) mené rotatif, tel qu'une roue dentée, en prise permanente avec l'organe (3) menant, des moyens d'entraînement des roues (7A, 7B) d'une même paire de roues de l'engin (1), lesdits moyens d'entraînement comprenant un arbre (6) d'entraînement de roues réalisé d'un seul tenant ou d'au moins deux sections (6A ; 6B) d'arbre d'entraînement de roue coaxiales aptes à entraîner chacune une roue (7A ; 7B) d'une même paire de roues de l'engin (1), et disposé entre, l'arbre (6) d'entraînement de roues ou chacune des sections (6A ; 6B) d'arbre d'entraînement de roue et l'organe (5) mené, un mécanisme (8) d'embrayage, le ou chaque mécanisme d'embrayage (8) comprenant au moins une pièce (9) montée mobile axialement, sur l'arbre (6) d'entraînement de roue ou la section (6A, 6B) d'arbre d'entraînement de roue avec lequel ledit mécanisme (8) d'embrayage coopère, entre une position écartée de l'organe (5) mené et une position rapprochée de l'organe (5) mené, la position écartée de l'organe (5) mené correspondant à un état activé du mécanisme (8) d'embrayage correspondant, la position rapprochée de l'organe (5) mené correspondant à un état désactivé du mécanisme (8) d'embrayage correspondant, le ou chaque mécanisme (8) d'embrayage étant un mécanisme (8) d'embrayage dit automatique activable par l'entraînement en rotation de l'organe (5) mené suivant un premier sens d'entraînement en rotation dit marche avant, et désactivable par l'entraînement en rotation de l'organe (5) mené suivant un deuxième sens de rotation opposé audit premier sens de rotation et dit marche arrière, ou par l'entraînement en rotation en marche avant de l'arbre (6) ou de la section (6A ; 6B) d'arbre d'entraînement de roue avec lequel il coopère, lorsque la vitesse de rotation de l'arbre (6) ou de la section (6A ; 6B) d'arbre d'entraînement de roue est supérieure à la vitesse de rotation de l'organe (5) mené, l'arbre (6) d'entraînement de roue ou chaque section d'arbre (6A ; 6B) d'entraînement de roue étant, à l'état désactivé du mécanisme (8) d'embrayage correspondant, libre de tourner dans l'un quelconque de ses sens de rotation, **caractérisée en ce que** ladite au moins une pièce (9) du ou de chaque mécanisme (8) d'embrayage disposée, à l'état désactivé du mécanisme (8) d'embrayage correspondant, en position rapprochée de l'organe (5) mené, est, dans ladite position, limitée en déplacement axial dans le sens d'un écartement de l'organe (5) mené, à l'état entraîné en marche arrière de l'organe (5) mené.

2. Transmission (2) pour engin (1) roulant selon la revendication 1, **caractérisée en ce que** ladite au moins une pièce (9) du ou de chaque mécanisme (8) d'embrayage disposée, à l'état désactivé du mécanisme (8) d'embrayage correspondant, en position rapprochée de l'organe (5) mené, comprend, pour sa limitation en déplacement axial dans le sens d'un écartement de l'organe (5) mené, des éléments (10) de retenue portés par ladite pièce (9), ces éléments (10) de retenue étant configurés pour, en position rapprochée de ladite pièce (9) de l'organe (5) mené et à l'état entraîné en marche arrière de l'organe (5) mené, venir en prise avec des éléments (11) de retenue complémentaires portés par l'organe (5) mené.

3. Transmission (2) pour engin (1) roulant selon la revendication 2, **caractérisée en ce que** les éléments (10) de retenue portés par ladite pièce (9) sont disposés sur un cercle de centre situé au niveau de l'arbre (6) d'entraînement de roues.

4. Transmission (2) pour engin (1) roulant selon l'une des revendications 2 ou 3, **caractérisée en ce que** les éléments (10) de retenue portés par ladite pièce (9) affectent la forme de crochets.

5. Transmission (2) pour engin (1) roulant selon l'une des revendications 2 à 4, **caractérisée en ce que** ladite au moins une pièce (9) du ou de chaque mécanisme (8) d'embrayage, disposée, à l'état désactivé du mécanisme (8) d'embrayage correspondant, en position rapprochée de l'organe (5) mené, se présente sous forme d'un plateau (91) d'embrayage monté, sur ledit arbre (6) ou la section (6A ; 6B) d'arbre d'entraînement de roue, libre à rotation et mobile axialement, et **en ce que** les éléments (10) de retenue portés par ladite pièce (9) sont disposés en saillie de la face du plateau (91) en regard de l'organe (5) mené.

6. Transmission (2) pour engin (1) roulant selon l'une des revendications 1 à 5, **caractérisée en ce que** ladite au moins une pièce (9) du ou de chaque mécanisme (8) d'embrayage est disposée, à l'état activé du mécanisme (8) d'embrayage correspondant, écartée de l'organe (5) mené et en prise avec un élément (12) porté par, et solidaire en rotation de, l'arbre (6) ou de la section (6A ; 6B) d'arbre d'entraînement, et, à l'état désactivé du mécanisme (8) d'embrayage correspondant, rapprochée de l'organe (5) mené et désaccouplée de l'élément (12) porté par, et solidaire en rotation, de l'arbre (6) d'entraînement de roues ou de la section (6A ; 6B) d'arbre d'entraînement de roue.

7. Transmission (2) pour engin (1) roulant selon la revendication 6, **caractérisée en ce que** ladite au moins une pièce (9) du ou de chaque mécanisme (8) d'embrayage qui a la forme d'un plateau (91) d'embrayage et l'organe (5) mené, qui affecte de préférence la forme d'une roue dentée, sont munis, sur chacune de leurs faces, de rampes, les rampes (13) d'une face du plateau (91) coopérant, lors du passage de l'état désactivé à l'état activé du mécanisme (8) d'embrayage, avec les rampes (14) de l'organe (5) mené pour un déplacement axial du plateau (91) d'embrayage dans une première direction d'écartement de l'organe (5) mené et de solidarisation du plateau (91) avec l'élément (12) porté par, et solidaire en rotation de, l'arbre (6) ou de la section (6A, 6B) d'arbre d'entraînement de roue, les rampes (15) de l'autre face du plateau (91) coopérant, lors du passage de l'état activé à l'état désactivé du mécanisme (8) d'embrayage, avec des rampes (16) de l'élément (12) porté par, et solidaire en rotation de, l'arbre (6) ou de la section (6A, 6B) d'arbre d'entraînement de roue pour provoquer par déplacement axial de sens opposé dudit plateau (91) d'embrayage, la mise en roue libre de l'arbre (6) ou de la section (6A, 6B) d'arbre d'entraînement de roue.

8. Transmission (2) pour engin (1) roulant selon la revendication 7, **caractérisée en ce que** les rampes (13) d'une face du plateau (91) d'embrayage qui coopèrent, lors du passage de l'état désactivé à l'état activé du mécanisme (8) d'embrayage, avec les rampes (14) de l'organe (5) mené pour un déplacement axial du plateau (91) d'embrayage dans une direction d'écartement de l'organe (5) mené sont ménagées sur les éléments (10) de retenue portés par ledit plateau (91) d'embrayage.

9. Transmission (2) pour engin (1) roulant selon l'une des revendications 7 ou 8, **caractérisée en ce que** les rampes (14) de l'organe (5) mené avec lesquelles les rampes (10) d'une face du plateau (91) d'embrayage coopèrent, lors du passage de l'état désactivé à l'état activé du mécanisme (8) d'embrayage, pour un déplacement axial du plateau (91) d'embrayage dans une première direction d'écartement de l'organe (5) mené sont ménagées sur les éléments (11) de retenue complémentaires portés par l'organe (5) mené.

10. Transmission (2) pour engin (1) roulant selon l'une des revendications 7 à 9, **caractérisée en ce que** les éléments (10) de retenue portés par ladite pièce (9) sont en forme générale de L et comprennent une première branche (100) prenant naissance sur le plateau (91) d'embrayage et se développant orthogonalement au plateau (91) d'embrayage suivant une direction parallèle à l'arbre (6) d'entraînement de roues et une deuxième branche (101) orthogonale à la première branche (100).

11. Transmission (2) pour engin (1) roulant selon l'une des revendications 2 à 10, **caractérisée en ce que** pour le ou au moins l'un des mécanismes (8) d'embrayage, les éléments (11) de retenue complémentaires de l'organe (5) mené avec lesquels viennent en prise les éléments (10) de retenue portés par la au moins une pièce (9) dudit mécanisme (8) d'embrayage, en position rapprochée de ladite pièce (9) de l'organe (5) mené et à l'état entraîné en marche arrière de l'organe (5) mené, affectent la forme de crochets disposés sur un cercle de centre situé au niveau de l'arbre (6) d'entraînement de roues, lesdits crochets de l'organe (5) mené étant configurés pour s'interpénétrer avec les éléments (10) de retenue de ladite au moins une pièce (9) dudit mécanisme (8) d'embrayage à l'état en prise desdits éléments (10) de retenue avec les éléments (11) de retenue complémentaires.

12. Transmission (2) pour engin (1) roulant selon l'une des revendications 1 à 11, **caractérisée en ce qu'**elle comprend un système (17) moteur d'entraînement en rotation de l'organe (3) menant configuré pour permettre d'une part, un entraînement dans le sens d'un entraînement en marche avant de l'organe (5) mené, d'autre part un entraînement dans le sens d'un entraînement en marche arrière de l'organe (5) mené.

13. Transmission (2) pour engin (1) roulant selon l'une des revendications 1 à 12, **caractérisée en ce qu'**elle comprend un système (18) de commande du système (17) moteur d'entraînement en rotation de l'organe (3) menant.

14. Engin (1) roulant à conducteur marchant, tel que tondeuse à gazon, **caractérisé en ce qu'**il est équipé d'une transmission (2) conforme à l'une des revendications 1 à 13.

## Patentansprüche

1. Getriebe (2) für ein fußgängergesteuertes Radfahrzeug (1), umfassend ein Antriebsteil (3), ein drehendes angetriebenes Teil (5) wie z. B. ein Zahnrad, das in permanentem Eingriff mit dem Antriebsteil (3) ist, Antriebsmittel der Räder (7A, 7B) eines gleichen Radpaars des Fahrzeugs (1), wobei die Antriebsmittel eine Welle (6) zum Antrieb der Räder umfassen, die aus einem einzigen Stück oder mindestens zwei koaxialen Abschnitten (6A; 6B) einer Radantriebswelle hergestellt ist, die ausgelegt sind, um jeweils ein Rad (7A; 7B) eines gleichen Radpaars des Fahrzeugs (1) anzutreiben, und zwischen der Radantriebswelle (6) oder jedem der Abschnitte (6A; 6B) der Radantriebswelle und dem angetriebenen Teil (5) angeordnet ist, einen Kupplungsmechanismus (8), wobei der oder jeder Kupplungsmechanismus (8) mindestens eine Stück (9) umfasst, das axial beweglich auf der Radantriebswelle (6) oder dem Abschnitt (6A, 6B) der Radantriebswelle, mit dem der Kupplungsmechanismus (8) zusammenarbeitet, zwischen einer Position, die vom angetriebenen Teil Organ (5) entfernt ist, und einer Position, die an das angetriebene Teil (5) angenähert ist, montiert ist, wobei die vom angetriebenen Teil (5) entfernte Position, einem aktivierten Zustand des entsprechenden Kupplungsmechanismus (8) entspricht, wobei die an das angetriebene Teil (5) angenähert Position einem deaktivierten Zustand des entsprechenden Kupplungsmechanismus (8) entspricht, wobei der oder jeder Kupplungsmechanismus (8) ein als automatisch bezeichneter Kupplungsmechanismus (8) ist, der durch die Versetzung des angetriebenen Teils (5) in Drehung gemäß einer ersten Drehantriebsrichtung, bezeichnet als Vorwärtsgang, aktiviert und durch die Versetzung des angetriebenen Teils (5) in Drehung gemäß einer zweiten Drehrichtung, die der ersten Drehrichtung entgegensetzt ist und als Rückwärtsgang bezeichnet wird, deaktiviert werden kann, oder durch die Versetzung in Drehung im Vorwärtsgang der Welle (6) oder des Abschnitts (6A; 6B) der Radantriebswelle, mit der er zusammenarbeitet, wenn die Drehgeschwindigkeit der Welle (6) oder des Abschnitts (6A; 6B) der Radantriebswelle höher als die Drehgeschwindigkeit des angetriebenen Teils (5) ist, wobei die Radantriebswelle (6) oder jeder Abschnitt der Radantriebswelle (6A; 6B) im deaktivierten Zustand des entsprechenden Kupplungsmechanismus sich frei in jeder ihrer Drehrichtungen drehen kann, **dadurch gekennzeichnet, dass** das oder mindestens ein Stück (9) des oder jedes Kupplungsmechanismus (8), der im deaktivierten Zustand des entsprechenden Kupplungsmechanismus (8) in der Position, die an das angetriebene Teil (5) angenähert ist, angeordnet ist, in der Position, die in der axialen Verschiebung in der Richtung einer Entfernung des angetriebenen Teiles (5) begrenzt ist, sich im angetriebenen Zustand im Rückwärtsgang des angetriebenen Teils (5) befindet.

2. Getriebe (2) für ein Radfahrzeug (1) nach Anspruch 1, **dadurch gekennzeichnet, dass** das mindestens eine Stück (9) des oder jedes angeordneten Kupplungsmechanismus (8) im deaktivierten Zustand des entsprechenden Kupplungsmechanismus (8) in der Position, die an das angetriebene Teil (5) angenähert ist, für seine Begrenzung in der axialen Verschiebung in Richtung einer Entfernung des angetriebenen Teils (5) Rückhalteelemente (10) umfasst, die von dem Stück (9) getragen werden, wobei diese Rückhalteelemente (10) konfiguriert sind, um, in der Position, die an das Stück (9) des angetriebenen (5) angenähert ist, und im angetriebenen Zustand im Rückwärtsgang des angetriebenen Teils (5) in Eingriff mit komplementären Rückhalteelementen (11) zu kommen, die vom angetriebenen Organ (5) getragen werden.

3. Getriebe (2) für eine Radfahrzeug (1) nach Anspruch 2, **dadurch gekennzeichnet, dass** die Rückhalteelemente (10), die von dem Stück (9) getragen werden, auf einem zentralen Kreis angeordnet sind, der sich auf der Ebene der Radantriebswelle (6) befindet.

4. Getriebe (2) für ein Radfahrzeug (1) nach einem der Ansprüche 2 oder 3, **dadurch gekennzeichnet, dass** die Rückhalteelemente (10), die von dem Stück (9) getragen werden, die Form von Haken annehmen.

5. Getriebe (2) für ein Radfahrzeug (1) nach einem der Ansprüche 2 bis 4, **dadurch gekennzeichnet, dass** das mindestens eine Stück (9) des oder jedes Kupplungsmechanismus (8), das im deaktivierten Zustand des entsprechenden Kupplungsmechanismus (8) in der Position, die an das angetriebene Teil (5) angenähert ist, angeordnet ist, die Form einer Kupplungsplatte (91) aufweist, die auf der Welle (6) oder dem Abschnitt (6A; 6B) der Radantriebswelle frei in der Drehung und axial beweglich montiert ist, und dadurch, dass die Rückhaltelemente (10), die von dem Stück (9) getragen werden, vorspringend von der Fläche der Platte (91) gegenüber dem angetriebenen Teil (5) angeordnet sind.

6. Getriebe (2) für ein Radfahrzeug (1) nach einem der Ansprüche 1 bis 5, **dadurch gekennzeichnet, dass** das mindestens eine Stück (9) des oder jedes Kupplungsmechanismus (8) im aktivierten Zustand des entsprechenden Kupplungsmechanismus (8) entfernt vom angetriebenen Teil (5) und in Eingriff mit einem Element (12), das von der Welle (6) oder dem Abschnitt (6A; 6B) der Antriebswelle getragen wird und damit drehfest ist, und, im deaktivierten Zustand des entsprechenden Kupplungsmechanismus (8), angenähert an das angetriebene Teil (5) und abgekoppelt vom Element (12), das von der Radantriebswelle oder dem Abschnitt (6A; 6B) der Radantriebswelle (6) getragen wird und damit in drehfest ist, angeordnet ist.

7. Getriebe (2) für ein Radfahrzeug (1) nach Anspruch 6, **dadurch gekennzeichnet ,dass** das mindestens eine Stück (9) des oder jedes Kupplungsmechanismus (8), das die Form einer Kupplungsplatte (91) aufweist, und das angetriebene Teil (5), das vorzugsweise die Form eines Zahnrads annimmt, auf jeder seiner Seiten mit Rampen ausgestattet ist, wobei die Rampen (13) einer Seite der Platte (91) bei ihrem Übergang vom deaktivierten Zustand in den aktivierten Zustand des Kupplungsmechanismus (8) mit den Rampen (14) des angetriebenen Teils (5) für eine axiale Verschiebung der Kupplungsplatte (91) in eine erste Richtung der Entfernung des angetriebenen Teils (5) und der festen Verbindung der Platte (91) mit dem Element (12) zusammenarbeiten, das von der Welle (6) oder dem Abschnitt (6A; 6B) der Radantriebswelle getragen wird und damit drehfest ist, wobei die Rampen (15) der anderen Seite der Platte (91) beim Übergang vom aktivierten Zustand in den deaktivierten Zustand des Kupplungsmechanismus (8) mit Rampen (16) des Elements (12) zusammenarbeiten, das von der Welle (6) oder dem Abschnitt (6A; 6B) der Radantriebswelle getragen wird und damit drehfest ist, um durch die axiale Verschiebung in der entgegengesetzten Richtung der Kupplungsplatte (91) die freie Drehung der Welle (6) oder des Abschnitts (6A; 6B) der Radantriebswelle zu verursachen.

8. Getriebe (2) für ein Radfahrzeug (1) nach Anspruch 7, **dadurch gekennzeichnet, dass** die Rampen (13) einer Seite der Kupplungsplatte (91), die beim Übergang vom deaktivierten Zustand in den aktivierten Zustand des Kupplungsmechanismus (8) mit den Rampen (14) des angetriebenen Teils (5) für eine axiale Verschiebung der Kupplungsplatte (91) in eine Richtung der Entfernung des angetriebenen Teils (5) zusammenarbeiten, auf den Rückhalteelementen (10) angebracht sind, die von der Kupplungsplatte (91) getragen werden.

9. Getriebe (2) für ein Radfahrzeug (1) nach einem der Ansprüche 7 oder 8, **dadurch gekennzeichnet, dass** die Rampen (14) des angetriebenen Teils (5), mit dem die Rampen (10) einer Seite der Kupplungsplatte (91) beim Übergang vom deaktivierten Zustand in den aktivierten Zustand des Kupplungsmechanismus (8) für eine axiale Verschiebung der Kupplungsplatte (91) in eine erste Richtung der Entfernung des geführten Organs (5) zusammenarbeiten, auf den komplementären Rückhalteelementen (11) angebracht sind, die vom geführten Organ (5) getragen werden.

10. Getriebe (2) für ein Radfahrzeug (1) nach einem der Ansprüche 7 bis 9, **dadurch gekennzeichnet, dass** die Rückhalteelemente (10), die von dem Stück (9) getragen werden, die allgemeine Form eines L aufweisen und einen ersten Zweig (100), der auf der Kupplungsplatte (91) seinen Ausgang nimmt und sich orthogonal zur Kupplungsplatte (91) gemäß einer Richtung parallel zur Radantriebswelle (6) entwickelt, und einen zweiten Zweig (101) orthogonal zum ersten Zweig (100) umfassen.

11. Getriebe (2) für ein Radfahrzeug (1) nach einem der Ansprüche 2 bis 10, **dadurch gekennzeichnet, dass** bei dem oder mindestens einem der Kupplungsmechanismen (8) die komplementären Rückhalteelemente (11) des angetriebenen Teils (5), mit denen die Rückhalteelemente (10) in Eingriff kommen, die von dem mindestens einen Stück (9) des Kupplungsmechanismus (8) getragen werden, in der Position, die an das Stück (9) des angetriebenen Teils (5) angenähert ist, und im angetriebenen Zustand im Rückwärtsgang des angetriebenen Teils (5) die Form von Haken annehmen, die auf einem zentralen Kreis, der sich auf der Ebene der Radantriebswelle (6) befindet, angeordnet sind, wobei die Haken des angetriebenen Teils (5) konfiguriert sind, um mit den Rückhalteelementen (10) des mindestens einen Stücks (9) des Kupplungsmechanismus (8) im Zustand des Eingriffs der Rückhalteelemente (10) mit den komplementären Rückhalteelementen (11) ineinanderzugreifen.

12. Getriebe (2) für ein Radfahrzeug (1) nach einem der Ansprüche 1 bis 11, **dadurch gekennzeichnet, dass** es ein Motorsystem (17) zum Versetzen des geführten Organs (3) in Drehung umfasst, das konfiguriert ist, um einerseits einen Antrieb in der Richtung eines Antriebs im Vorwärtsgang des angetriebenen Teils (5), andererseits einen Antrieb in der Richtung eines Antriebs im Rückwärtsgang des angetriebenen Teils (5) zu ermöglichen.

13. Getriebe (2) für ein Radfahrzeug (1) nach einem der Ansprüche 1 bis 12, **dadurch gekennzeichnet, dass** es ein Steuersystem (18) des Motorsystems (17) zur Versetzung des geführten Organs (3) in Drehung umfasst.

14. Fußgängergesteuertes Radfahrzeug (1), wie z. B. einen Rasenmäher, **dadurch gekennzeichnet, dass** es mit einem Getriebe (2) nach einem der Ansprüche 1 bis 13 ausgestattet ist.

## Claims

1. A transmission (2) for a pedestrian-controlled wheeled vehicle (1), comprising a driving member (3), a rotary driven member (5), such as a toothed wheel, permanently engaged with the driving member (3), driving means for driving the wheels (7A, 7B) of a same pair of wheels of the vehicle (1), said driving means comprising a wheel drive shaft (6) produced in a single piece or at least two coaxial wheel drive shaft sections (6A; 6B) that are capable of each driving a wheel (7A; 7B) of a same pair of wheels of the vehicle (1), and disposed between the wheel drive shaft (6) or each of the wheel drive shaft sections (6A; 6B) and the driven member (5), a clutch mechanism (8), the or each clutch mechanism (8) comprising at least one part (9) mounted so as to be axially mobile, on the wheel drive shaft (6) or wheel drive shaft section (6A, 6B) with which said clutch mechanism (8) cooperates, between a position away from the driven member (5) and a position close to the driven member (5), the position away from the driven member (5) corresponding to an activated state of the corresponding clutch mechanism (8), the position close to the driven member (5) corresponding to a deactivated state of the corresponding clutch mechanism (8), the or each clutch mechanism (8) being a so-called automatic clutch mechanism (8) that can be activated by driving the driven member (5) in rotation in a first, so-called forward, rotational driving direction, and that can be deactivated by driving the driven member (5) in rotation in a second, so-called reverse, direction of rotation counter to said first direction of rotation, or by driving the wheel drive shaft (6) or the wheel drive shaft section (6A; 6B) with which it cooperates in forward rotation, when the speed of rotation of the wheel drive shaft (6) or the wheel drive shaft section (6A; 6B) is greater than the speed of rotation of the driven member (5), the wheel drive shaft (6) or each wheel drive shaft section (6A; 6B) being, when the corresponding clutch mechanism (8) is in the deactivated state, free to turn in either one of its directions of rotation, **characterized in that** said at least one part (9) of the or each clutch mechanism (8) disposed, when the corresponding clutch mechanism (8) is in the deactivated state, in a position close to the driven member (5), is, in said position, limited in axial displacement in the direction of a movement away from the driven member (5), when the driven member (5) is in the forwardly driven state.

2. The transmission (2) for a wheeled vehicle (1) according to claim 1, **characterized in that** said at least one part (9) of the or each clutch mechanism (8) disposed, when the corresponding clutch mechanism (8) is in the deactivated state, in a position close to the driven member (5), comprises, for limiting the axial displacement thereof in the direction of a movement away from the driven member (5), retaining elements (10) borne by said part (9), these retaining elements (10) being configured to, when said part (9) is in a position close to the driven member (5) and when the driven member (5) is in the reversely driven state, engage with complementary retaining elements (11) borne by the driven member (5).

3. The transmission (2) for a wheeled vehicle (1) according to claim 2, **characterized in that** the retaining elements (10) borne by said part (9) are disposed on a circle with a center situated at the wheel drive shaft (6).

4. The transmission (2) for a wheeled vehicle (1) according to either of claims 2 or 3, **characterized in that** the retaining elements (10) borne by said part (9) take the form of hooks.

5. The transmission (2) for a wheeled vehicle (1) according to one of claims 2 to 4, **characterized in that** said at least one part (9) of the or each clutch mechanism (8), disposed, when the corresponding clutch mechanism (8) is in the deactivated state, in a position close to the driven member (5), takes the form of a clutch plate (91) mounted, on said wheel drive shaft (6) or wheel drive shaft section (6A; 6B), so as to be free to rotate and axially mobile, and **in that** the retaining elements (10) borne by said part (9) are disposed protruding from the face of the plate (91) opposite the driven member (5).

6. The transmission (2) for a wheeled vehicle (1) according to one of claims 1 to 5, **characterized in that** said at least one part (9) of the or each clutch mechanism (8) is disposed, when the corresponding clutch mechanism (8) is in the activated state, away from the driven member (5) and engaged with an element (12) borne by, and secured in rotation to, the drive shaft (6) or the drive shaft section (6A; 6B), and, when the corresponding clutch mechanism (8) is in the deactivated state, close to the driven member (5) and uncoupled from the element (12) borne by, and secured in rotation to, the wheel drive shaft (6) or the wheel drive shaft section (6A; 6B).

7. The transmission (2) for a wheeled vehicle (1) according to claim 6, **characterized in that** said at least one part (9) of the or each clutch mechanism (8) which has the form of a clutch plate (91) and the driven member (5), which preferably takes the form of a toothed wheel, are provided, on each of their faces, with ramps, the ramps (13) of a face of the plate (91) cooperating, when the clutch mechanism (8) transitions from the deactivated state to the activated state, with the ramps (14) of the driven member (5) for an axial displacement of the clutch plate (91) in a first direction of movement away from the driven member (5) and securing the plate (91) with the element (12) borne by, and secured in rotation to, the wheel drive shaft (6) or the wheel drive shaft section (6A, 6B), the ramps (15) of the other face of the plate (91) cooperating, when the clutch mechanism (8) transitions from the activated state to the deactivated state, with ramps (16) of the element (12) borne by, and secured in rotation to, the wheel drive shaft (6) or the wheel drive shaft section (6A, 6B) so as to bring about, by axial displacement in the opposite direction of said clutch plate (91), the free-wheeling of the wheel drive shaft (6) or of the wheel drive shaft section (6A, 6B).

8. The transmission (2) for a wheeled vehicle (1) according to claim 7, **characterized in that** the ramps (13) of a face of the clutch plate (91) which cooperate, when the clutch mechanism (8) transitions from the deactivated state to the activated state, with the ramps (14) of the driven member (5) for an axial displacement of the clutch plate (91) in a direction of movement away from the driven member (5) are formed on the retaining elements (10) borne by said clutch plate (91).

9. The transmission (2) for a wheeled vehicle (1) according to claim 7 or 8, **characterized in that** the ramps (14) of the driven member (5) with which the ramps (10) of a face of the clutch plate (91) cooperate, when the clutch mechanism (8) transitions from the deactivated state to the activated state, for an axial displacement of the clutch plate (91) in a first direction of movement away from the driven member (5) are formed on the complementary retaining elements (11) borne by the driven member (5).

10. The transmission (2) for a wheeled vehicle (1) according to one of claims 7 to 9, **characterized in that** the retaining elements (10) borne by said part (9) have an overall L shape and comprise a first branch (100) starting on the clutch plate (91) and extending orthogonally to the clutch plate (91) in a direction parallel to the wheel drive shaft (6) and a second branch (101) orthogonal to the first branch (100).

11. The transmission (2) for a wheeled vehicle (1) according to one of claims 2 to 10, **characterized in that**, for the or at least one of the clutch mechanisms (8), the complementary retaining elements (11) of the driven member (5) with which the retaining elements (10) borne by the at least one part (9) of said clutch mechanism (8) engage, when said part (9) is in a position close to the driven member (5) and when the driven member (5) is in the rearwardly driven state, take the form of hooks disposed on a circle with a center situated at the wheel drive shaft (6), said hooks of the driven member (5) being configured to interpenetrate with the retaining elements (10) of said at least one part (9) of said clutch mechanism (8) when said retaining elements (10) are in the state engaged with the complementary retaining elements (11).

12. The transmission (2) for a wheeled vehicle (1) according to one of claims 1 to 11, **characterized in that** it comprises a motor system (17) for driving the driving member (3) in rotation configured to allow, on the one hand, the driven member (5) to be driven in a forward drive direction, and, on the other hand, the driven member (5) to be driven in a reverse drive direction.

13. The transmission (2) for a wheeled vehicle (1) according to one of claims 1 to 12, **characterized in that** it comprises a control system (18) of the motor system (17) for driving the driving member (3) in rotation.

14. A pedestrian-controlled wheeled vehicle (1), such as a lawnmower, wherein it is equipped with a transmission (2) according to one of claims 1 to 13.
